Europäisches Patentamt

European Patent Office

Office européen des brevets

(11) Numéro de publication: **0 631 362 A1**

## DEMANDE DE BREVET EUROPEEN

(21) Numéro de dépôt: **93420418.1**

(22) Date de dépôt: **27.10.93**

(51) Int. Cl.5: **H02J 3/18**, G05F 1/70

(30) Priorité: **21.06.93 FR 9307599**

(43) Date de publication de la demande:
**28.12.94 Bulletin 94/52**

(84) Etats contractants désignés:
**BE CH DE ES GB IT LI NL SE**

(71) Demandeur: **MERLIN GERIN**
**2, chemin des Sources**
**F-38240 Meylan (FR)**

(72) Inventeur: **Theoleyre, Serge**
**MERLIN GERIN - Sce. Propriété Industrielle**
**F-38050 Grenoble Cedex 09 (FR)**
Inventeur: **Lupin, Jean-Marc**
**MERLIN GERIN - Sce. Propriété Industrielle**
**F-38050 Grenoble Cedex 09 (FR)**

(74) Mandataire: **Jouvray, Marie-Andrée et al**
**MERLIN GERIN**
**Sce. Propriété Industrielle**
**F-38050 Grenoble Cédex 9 (FR)**

(54) **Dispositif de compensation de puissance réactive.**

(57) Pour réaliser la compensation de l'énergie réactive selfique d'une installation des groupes (21), des condensateurs (22) sont connectés au circuit principal (16) par des interrupteurs commandés (20). Le contrôle de ce dispositif est réalisé par des moyens (17) de mesure et de commande qui réagissent à la puissance apparente ou au courant.

Fig.4

EP 0 631 362 A1

EP 0 631 362 A1

L'invention concerne un dispositif de compensation de puissance réactive comportant au moins un groupe de condensateurs reliés à un circuit principal d'alimentation électrique par un interrupteur commandé.

Les machines électriques, telles que les moteurs ou les transformateurs, alimentées en courant alternatif font intervenir des énergies actives et réactives. L'énergie active, mesurée en kWh, se transforme en énergie mécanique ou en chaleur. L'énergie réactive, mesurée en kvarh, est due essentiellement aux composantes selfiques présentes dans les charges, et ne correspond pas à de la chaleur ou à un travail mécanique. Cela se traduit par un déphasage entre le courant I et la tension U appliquée à la charge. La puissance apparente étant sous la forme $R = UI$, la puissance active est sous la forme $P = UI \cos \phi$ et la puissance réactive $Q = UI \sin \phi$. On constate que pour une puissance active donnée, plus le facteur de puissance $\cos \phi$ est petit plus le courant appelé et la puissance apparente sont grands. Un petit $\cos \phi$ implique donc un surdimensionnement de l'installation en amont. Afin d'optimiser les puissances disponibles, les sociétés de distribution d'énergie ont défini des systèmes de facturation qui pénalisent les abonnés ayant un facteur de puissance trop faible, ce qui correspond à des puissances réactives et énergie réactive élevées. L'énergie réactive est alors comptée et facturée lorsque sa valeur dépasse un certain pourcentage d'énergie active consommée (par exemple 40%). De façon connue, l'énergie réactive consommée par l'installation électrique peut être réduite en connectant sur la ligne une ou plusieurs batteries de condensateurs. La connexion de ces batteries de condensateurs est commandée par des relais réagissant à la consommation d'énergie réactive. Une autre manière d'optimiser les puissances disponibles consiste à facturer les abonnements en fonction de la puissance apparente, sans facturation de l'énergie réactive consommée. Ce type d'abonnement a aussi pour but de pénaliser les installations ayant un faible facteur de puissance.

Dans les abonnements fonction de la puissance apparente sans facturation de l'énergie réactive consommée, des relais permettant la connexion de batteries de condensateurs en fonction de la puissance réactive mesurée peuvent également être utilisés. Cependant le coût de ces relais est élevé par rapport au gain qu'ils pourraient apporter en demandant des abonnements de puissance inférieure. D'autres dispositifs emploient des délesteurs, mais cette solution impose des contraintes aux utilisateurs.

L'invention a pour but un dispositif de compensation de puissance réactive simple et peu coûteux.

Selon l'invention, ce but est atteint par le fait que le dispositif comporte des moyens de mesure du courant dans le circuit principal d'alimentation électrique, et des moyens de mesure d'une grandeur représentative de la puissance apparente, connectés à la sortie des moyens de mesure de courant et commandant la fermeture de l'interrupteur commandé lorsque ladite grandeur représentative dépasse une valeur de seuil prédéterminée.

Selon un mode de réalisation préférentiel, la grandeur représentative de la puissance apparente est constituée par le courant mesuré par lesdits moyens de mesure du courant.

Les moyens de mesure du courant peuvent être placés en aval ou en amont de la connexion de l'interrupteur commandé au circuit principal d'alimentation.

Dans un développement de l'invention, le dispositif comporte une pluralité de groupes de condensateurs, d'interrupteurs commandés et de valeurs de seuil prédéterminées, les moyens de mesure contrôlant la fermeture et l'ouverture des interrupteurs commandés de manière à connecter un ou plusieurs groupes de condensateurs si une ou plusieurs valeurs de seuil prédéterminées sont dépassées.

D'autres avantages et caractéristiques ressortiront plus clairement de la description qui va suivre, de modes particuliers de réalisation de l'invention, donnés à titre d'exemples non limitatifs, et représentés aux dessins annexés, sur lesquels:

La figure 1 représente les vecteurs des parties apparentes, actives et réactives du courant et de la puissance.

La figure 2 montre le schéma d'un dispositif de compensation connu.

La figure 3 représente les vecteurs de puissance dans un mode de réalisation de l'invention.

La figure 4 montre un premier mode de réalisation d'un dispositif de compensation selon l'invention.

La figure 5 montre un second mode de réalisation d'un dispositif de compensation selon l'invention.

La figure 6 représente les vecteurs de puissance d'un dispositif selon un développement de l'invention.

La figure 7 indique la courbe de gain de puissance apparente en fonction du facteur de puissance.

La figure 8 indique le rapport entre les puissances réactive et active en fonction du facteur de puissance.

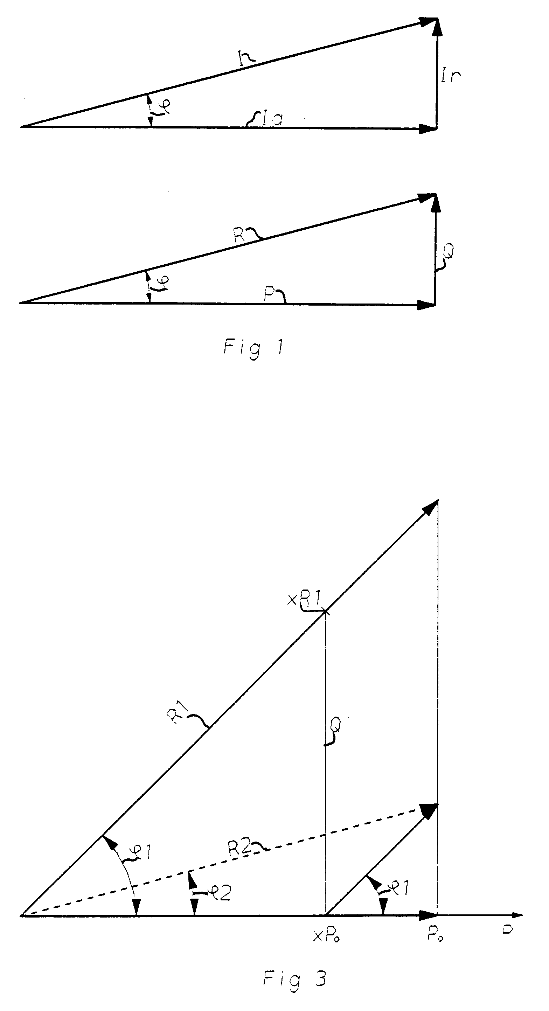

Les diagrammes des courants et des puissances représentés en figure 1 montrent les relations entre les différentes grandeurs. Le courant I se décompose en une partie active Ia en phase avec la tension d'alimentation U, et une partie réactive Ir déphasée de 90° par rapport à la tension du réseau, ainsi $Ia = I \cos \phi$ et $Ir = I \sin \phi$. De la même manière, la puissance apparente R, égale au produit UI, se décompose en une puissance active $P = UI \cos \phi$ 1 une puissance réactive $Q = UI \sin \phi$. Lorsque le facteur de

2

puissance Cos $\phi$ est petit, le rapport entre la puissance apparente et la puissance active utilisée devient très élevé et conduit à un surdimensionnement des installations électriques. Simultanément, la puissance réactive Q et, en conséquence, l'énergie réactive, sont d'autant plus élevées que le facteur de puissance est petit. Afin d'optimiser les puissances disponibles, les sociétés distributrices d'énergie ont défini des systèmes de facturation qui pénalisent les abonnés ayant un Cos $\phi$ trop bas, par exemple en facturant l'énergie réactive lorsqu'elle dépasse un certain pourcentage de l'énergie active consommée.

Pour réduire la consommation d'énergie réactive, l'utilisateur peut compenser son installation électrique en installant une batterie de condensateurs. De façon connue, les condensateurs sont séparés en groupes afin d'optimiser la capacité de l'énergie réactive de compensation et éviter la surcompensation.

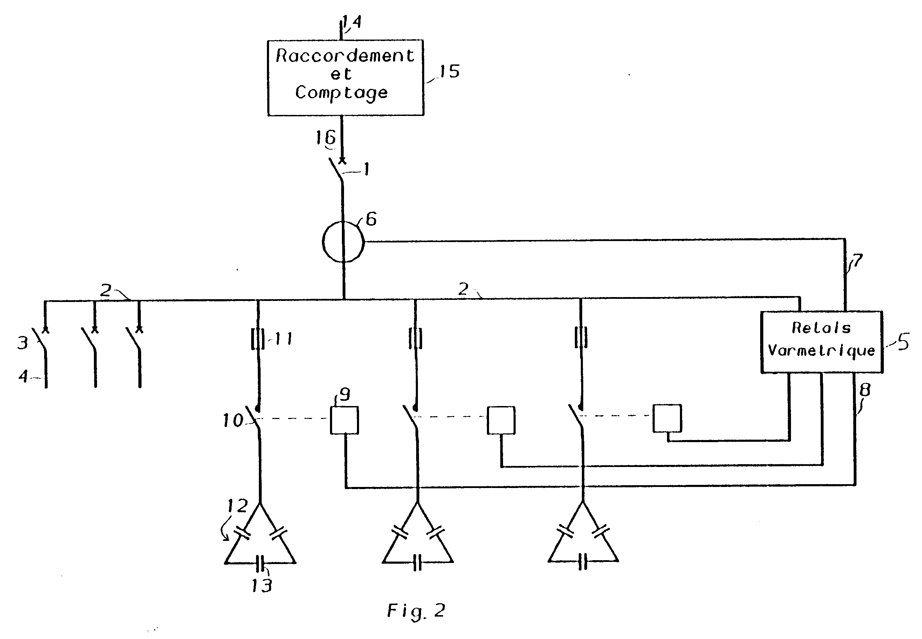

La figure 2 montre un dispositif connu de compensation automatique d'une installation. Un disjoncteur 1 en tête d'installation alimente une ligne de distribution 2 sur laquelle sont connectés des disjoncteurs 3 alimentant des départs 4 et des circuits de compensation. Un circuit de compensation comporte généralement un groupe 12 de condensateurs 13 connectés à la ligne de distribution 2 par l'intermédiaire d'un interrupteur commandé (10,9) et d'un fusible de protection 11. Les interrupteurs commandés sont contrôlés par un relais varmétrique 5 sensible à la puissance réactive de l'installation. Pour déterminer les valeurs des puissances réactive et active, le relais 5 a besoin de la tension de la ligne de distribution 2 et du courant d'alimentation en amont de la ligne de distribution 2.

Le courant est prélevé en amont de la ligne de distribution 2 à l'aide d'un transformateur de courant 6 relié au relais 5 par un circuit secondaire 7. Lorsque la puissance réactive, selfique dépasse un seuil ou un pourcentage prédéterminé de la puissance active, le relais 5 commande la fermeture d'un interrupteur 10 et un groupe de condensateurs est connecté à la ligne de distribution 2. Si la puissance réactive, selfique, reste élevée, d'autres groupes de condensateurs peuvent être connectés de façon à compenser progressivement la valeur de la puissance réactive selfique. Lorsque les charges selfiques de l'installation sont réduites ou disparaissent, le relais détecte une puissance réactive capacitive et ouvre les interrupteurs commandés pour éviter la surcompensation.

Ces dispositifs réagissant à la puissance réactive sont complexes et coûteux. Ils ne sont pas adaptés aux installations de puissance peu élevée ni aux abonnements fonction de la puissance apparente. Selon un mode de réalisation de l'invention, un dispositif de compensation qui réagit en fonction de la puissance apparente permet de réduire les coûts de contrôle de la puissance.

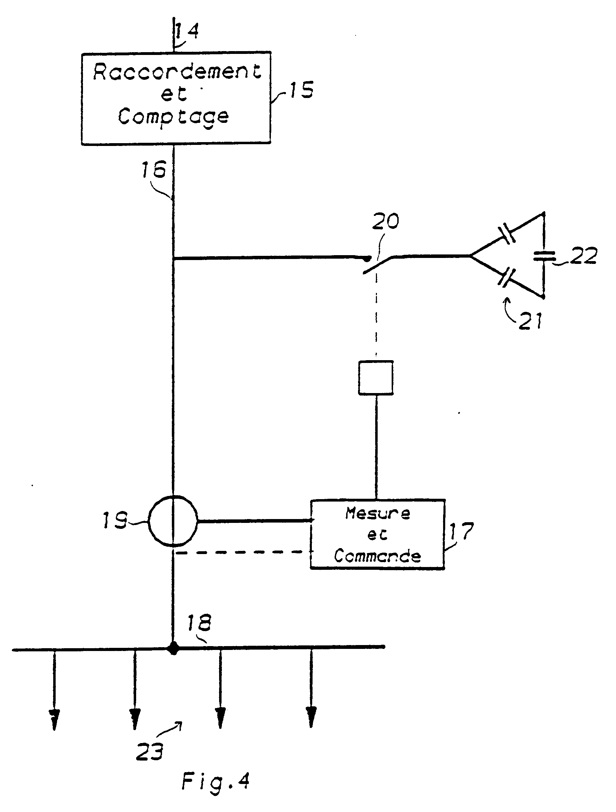

La figure 3 représente les vecteurs des puissances dans un tel dispositif. Pour une installation ayant un facteur de puissance Cos $\phi1$ connu, le seuil de connexion des condensateurs est représenté par un coefficient x. Ce seuil correspond à une partie xPo de la puissance active Po ou xR1 de la puissance apparente R1. Ainsi lorsque ce seuil est atteint la puissance réactive selfique Q est annulée par une puissance réactive capacitive de même valeur mais de signe opposé Q = xPo tan $\phi1$. Lorsque la puissance continue à augmenter, la partie située entre xPo et Po conserve le déphasage initial $\phi1$ mais la puissance apparente globale de l'installation R2 a un déphasage $\phi2$ plus petit et donc une valeur R2 = P/Cos $\phi2$ plus faible que la valeur R1 qui aurait été obtenue sans compensation.

La figure 4 représente un premier mode de réalisation d'un dispositif mettant en oeuvre l'invention. Un dispositif de comptage et de raccordement 15 est, comme dans le dispositif selon la figure 2, disposé entre un réseau de distribution 14 et un circuit principal d'alimentation 16. Des moyens de mesure et de commande 17 sont connectés à la sortie de capteurs de courant 19 et de tension destinés à mesurer le courant et la tension fournis à la ligne de distribution secondaire 18 qui alimente des départs 23. Un groupe 21 de condensateurs 22 est relié à travers un interrupteur commandé 20 au circuit principal d'alimentation 16 en amont des capteurs de courant et de tension. La commande de l'interrupteur 20 est effectuée par un relais lorsque les moyens de mesure et de commande 17 ont détecté le dépassement d'un seuil prédéterminé, xR1 sur la puissance apparente consommée par l'installation. Lorsque l'interrupteur 20 est fermé, les condensateurs sont connectés au circuit 16 et la puissance apparente R2 vue par le dispositif de comptage 15 devient inférieure à la puissance apparente R1 vue par les moyens de mesure 17. Ce gain de puissance apparente permet donc de choisir un abonnement et une tarification inférieurs. Le positionnement des moyens de mesure et de commande en aval de la connexion des condensateurs assure un fonctionnement stable du dispositif, la puissance apparente vue par les moyens de mesure n'étant pas modifiée.

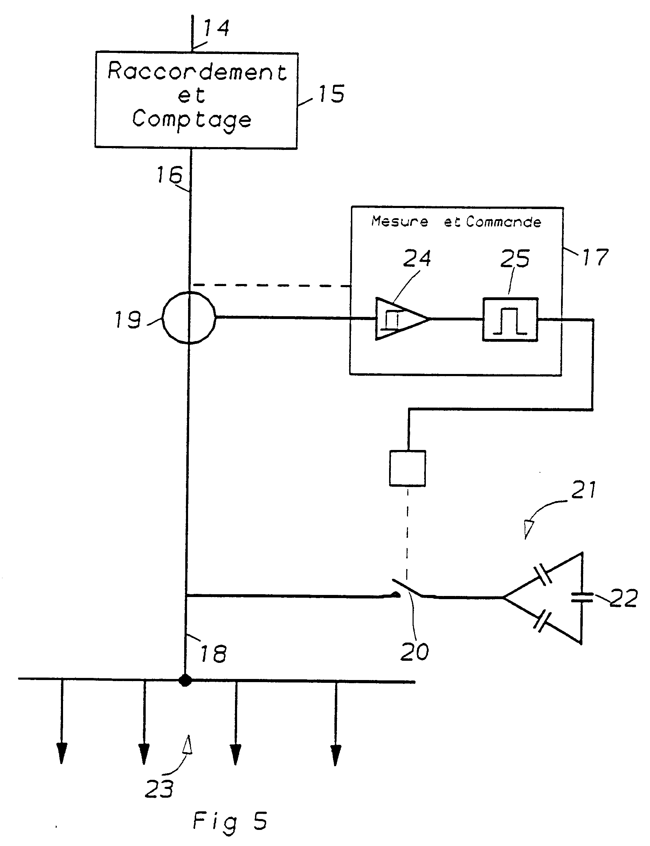

La figure 5 représente un second mode de réalisation d'un dispositif mettant en oeuvre l'invention. Le dispositif de comptage et de raccordement 15 est, comme dans le dispositif selon la figure 2, disposé entre un réseau de distribution 14 et un circuit principal d'alimentation 16. Les moyens de mesure et de commande 17 sont connectés à la sortie de capteurs de courant 19 et éventuellement de tension destinés à mesurer le courant et la tension fournis à la ligne de distribution secondaire 18 qui alimente des départs 23. Le groupe 21 de condensateurs 22 est relié à travers l'interrupteur commandé 20 au circuit principal d'alimentation 16 en aval des capteurs de courant et de tension. La commande de l'interrupteur 20 est effectuée par un relais lorsque les moyens de mesure et de commande 17 ont détecté le dépassement d'un seuil prédéterminé, xR1 sur la puissance apparente consommée par l'installation. Lorsque l'interrupteur 20 est fermé, les condensateurs sont connectés au circuit 16 et la puissance apparente R2 vue par le dispositif de comptage 15 devient inférieure à la puissance apparente R1 qui aurait été atteinte sans compensation. Ce gain de puissance apparente permet, comme dans le premier mode de réalisation de choisir un abonnement et une tarification inférieurs.

Dans le second mode de réalisation, la puissance apparente vue par les moyens de mesure est modifiée lors de la connexion ou la déconnexion des groupes de condensateurs. Les variations de la puissance apparente peuvent provoquer une instabilité du fonctionnement du dispositif. Pour éviter ce risque d'instabilité, les moyens de mesure et de commande 17 comportent un comparateur 24 de seuil à hystérésis et un temporisateur 25.

Le comparateur 24 permet d'avoir des seuils prédéterminés différents pour la fermeture et l'ouverture de l'interrupteur 20. Le temporisateur 25 filtre les dépassements momentanés des seuils prédéterminés. L'interrupteur 20 est commandé si le seuil prédéterminé est dépassé pendant un temps minimum prédéterminé.

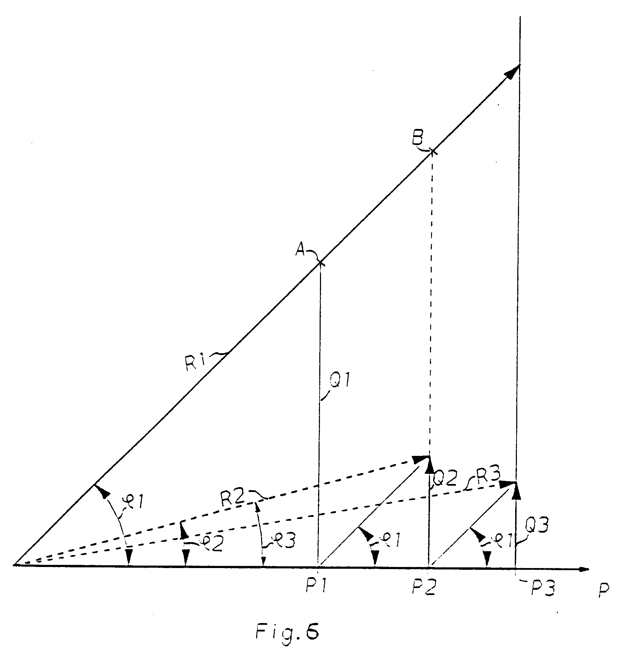

Une compensation plus précise de la puissance réactive peut être effectuée par plusieurs groupes de condensateurs connectés lorsque la puissance apparente atteint différents seuils. La figure 6 illustre les vecteurs de puissance d'un dispositif de compensation à deux seuils. La puissance apparente R1 consommée par l'installation est mesurée par les moyens 17 à un déphasage $\phi1$ avec la puissance active P. Lorsqu'un seuil A de puissance apparente est mesuré par les moyens 17, un premier interrupteur commandé se ferme et un premier groupe de condensateurs compense la puissance réactive Q1. La puissance apparente vue par le dispositif de comptage et de raccordement 15 se rapproche de la puissance active P1 alors que les moyens des mesure mesurent toujours la puissance apparente A sur l'axe de R1. Si la puissance consommée augmente encore, la puissance apparente R2 vue par le dispositif d'abonnement augmente ainsi que le déphasage $\phi2$. Lorsque la puissance apparente lue par les moyens de mesure 17 atteint un seuil B, un second groupe de condensateurs est connecté au circuit principal pour compenser la puissance réactive Q2. La puissance apparente se rapproche alors de la puissance active P2. Pour des valeurs de puissances actives P3 proches de la puissance d'abonnement de l'installation, la puissance apparente R3 a une valeur voisine de la puissance active, la puissance réactive Q3 et le déphasage $\phi3$ étant faibles bien que la puissance R1 lue par les moyens de mesure reste élevée. Une diminution de la puissance consommée provoque la déconnexion du second puis du premier groupe de condensateurs, lorsque la puissance apparente mesurée devient inférieure au second puis au premier seuil (B,A). l'ouverture des interrupteurs pour déconnecter les condensateurs est indispensable afin d'éviter la surcompensation et les surtensions lorsque la puissance consommée est faible.

Dans les deux modes de réalisation (figures 4 et 5), le seuil xR1 d'actionnement de l'interrupteur 20, correspondant à la puissance active xP0 (figure 3) peut être optimisé de façon à avoir la relation:

$$xR1 = xP0 / Cos \phi1 = P0 / Cos \phi2 = R2$$

soit un seuil de connexion des condensateurs xR1 où :

$$x = \frac{Cos^2 \varphi1 - 1 + \sqrt{1 + Cos^4 \varphi1 - Cos^2 \varphi1}}{Cos^2 \varphi1}$$

La valeur de la puissance réactive à installer est alors égale à:

$$Q = xPo \tan \phi1$$

Le gain sur l'abonnement de la puissance est alors égal à R2/R1 = x.

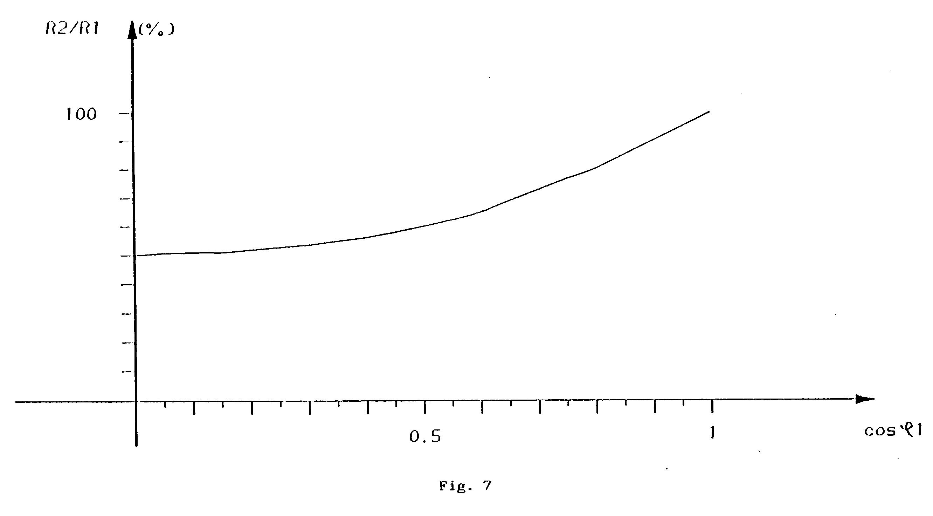

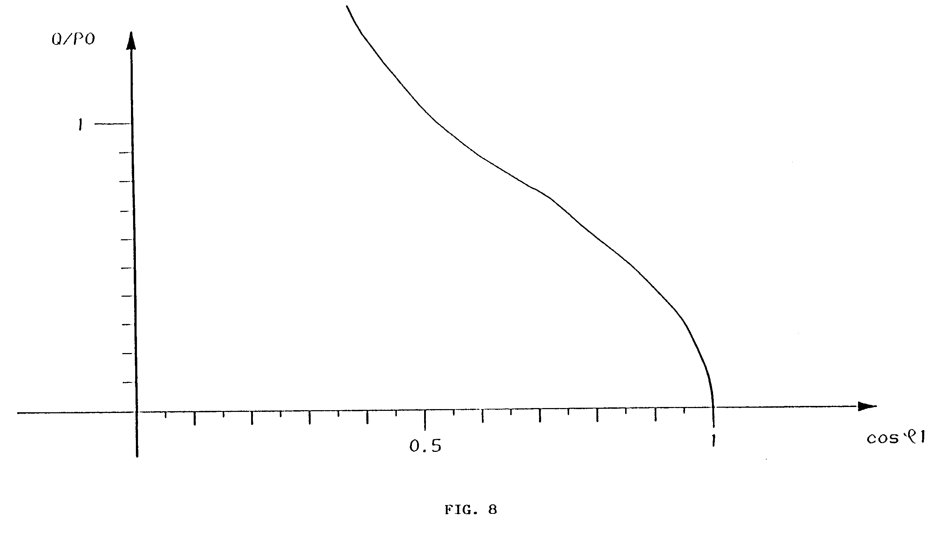

La figure 7 montre l'évolution du gain sur l'abonnement en fonction du facteur de puissance Cos $\phi1$ si les conditions citées ci-dessus sont remplies. La courbe de la figure 8 représente le rapport entre la puissance réactive Q des condensateurs à installer et la puissance active Po en fonction du facteur de puissance si les conditions sur la valeur de x sont également vérifiées.

Les installations ont généralement des facteurs de puissance Cos $\phi$ situés entre les valeurs 0,6 et 0,8. Pour un Cos $\phi$ = 0,7 et un seuil xR1 de puissance apparente égale à la puissance R souscrite lors de l'abonnement, les condensateurs doivent générer une puissance réactive Q = 0,7 R (0,8 à 0,6). Le gain sur la puissance disponible est alors en moyenne de 30% (40% à 20%). Pour des raisons économiques, il peut être intéressant de se limiter à des valeurs plus basses et retenir Q 0,4R (0,3 à 0,5). Le gain sur la puissance disponible est alors de l'ordre de 25% (20 à 30).

Les moyens de mesure et de commande 17 (figures 4 et 5) réagissent à la puissance apparente, mais comme la tension du réseau électrique est stable et que la calibration de l'abonnement est généralement basée sur le courant maximum, les moyens 17 peuvent répondre à la valeur du courant uniquement. Les seuils de fermeture des interrupteurs commande 20 sont alors proportionnels au courant maximum défini par l'abonnement. Dans un mode de réalisation très simple, les moyens de mesure et de commande 17 ainsi que l'interrupteur commandé (20) peuvent être groupés en un interrupteur ampèremétrique.

## Revendications

1. Dispositif de compensation de puissance réactive comportant au moins un groupe (21) de condensateurs (22) reliés à un circuit principal d'alimentation électrique (16) par un interrupteur commandé (20), dispositif caractérisé en ce qu'il comporte des moyens (19) de mesure du courant dans le circuit principal (16) d'alimentation électrique, et des moyens de mesure d'une grandeur représentative de la puissance apparente, connectés à la sortie des moyens de mesure de courant et commandant la fermeture de l'interrupteur commandé (20) lorsque ladite grandeur représentative dépasse une valeur de seuil predéterminée.

2. Dispositif selon la revendication 1 caractérisé en ce que la grandeur représentative de la puissance apparente est constituée par le courant mesuré par lesdits moyens de mesure du courant.

3. Dispositif selon l'une des revendications 1 et 2, caractérisé en ce que les moyens de mesure (19) du courant sont situés en aval de la connexion de l'interrupteur commandé (20) au circuit principal d'alimentation (16).

4. Dispositif selon l'une des revendications 1 et 2, caractérisé en ce que les moyens de mesure (19) du courant sont situés en amont de la connexion de l'interrupteur commandé (20) au circuit principal d'alimentation (16).

5. Dispositif selon l'une quelconque des revendications 1 à 4 caractérisé en ce qu'il comporte une pluralité de groupes de condensateurs, d'interrupteurs commandés et de valeurs de seuil prédéterminées, les moyens de mesure (17) contrôlant la fermeture et l'ouverture des interrupteurs commandés, de manière à connecter un ou plusieurs groupes de condensateurs si une ou plusieurs valeurs de seuil prédéterminées sont dépassées.

6. Dispositif selon l'une quelconque des revendications 1 à 5 caractérisé en ce qu'une valeur de seuil prédéterminée (xR1) correspond à la valeur de la puissance d' abonnement de l'installation.

7. Dispositif selon l'une quelconque des revendications 1 à 6 caractérisé en ce que les moyens de mesure et de commande (17) et l'interrupteur commandé (20,19) sont groupés en un seul module de type relais ampèremétrique.

8. Dispositif selon l'une quelconque des revendications 1 à 7 caractérisé en ce que le seuil prédéterminé comporte un cycle d'hystérésis.

9. Dispositif selon l'une quelconque des revendications 1 à 8 caractérisé en ce que l'interrupteur commandé est commandé si le seuil prédéterminé est dépassé pendant un temps prédéterminé.

Fig 1

Fig 3

Fig. 2

Raccordement et Comptage

Relais Varmetrique

EP 0 631 362 A1

Fig.4

Fig 5

Fig.6

Fig. 7

FIG. 8

EP 0 631 362 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | 1985 RURAL ELECTRIC POWER CONFERENCE, 28 Avril 1985, SPRINGFIELD,ILLINOIS pages 1 - 7 HARDER ET AL 'distribution capacitor control -an overview' * le document en entier * | 1-4 | H02J3/18 G05F1/70 |
| A | US-A-4 317 076 (PRICE) * colonne 3, ligne 44 - colonne 6, ligne 12 * * colonne 9, ligne 4 - ligne 46; figures 1,2 * | 1,4 | |
| A | PATENT ABSTRACTS OF JAPAN vol. 14, no. 054 (P-999) 31 Janvier 1990 & JP-A-01 280 811 (MITSUBISHI) 13 Novembre 1989 * abrégé * | 1,4,5 | |
| A | DATABASE INSPEC INSTITUTE OF ELECTRICAL ENGINEERS, STEVENAGE, GB Inspec No. 2970213 MERELLI 'new vigilance on cos phi power factor correction' * abrégé * & MESURES, vol.52, no.8, 25 Mai 1987, FRANCE pages 49 - 53 | 1,6 | DOMAINES TECHNIQUES RECHERCHES (Int.Cl.5) H02J G05F G01R |
| A | EP-A-0 168 147 (ARTHUR TREVOR WILLIAMS) * le document en entier * | | |

Le présent rapport a été établi pour toutes les revendications

| Lieu de la recherche | Date d'achèvement de la recherche | Examinateur |
|---|---|---|
| LA HAYE | 8 Septembre 1994 | Calarasanu, P |